(19) Europäisches Patentamt
European Patent Office
Office européen des brevets

(11) **EP 1 216 165 B1**

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(21) Anmeldenummer: **00969346.6**

(22) Anmeldetag: **29.09.2000**

(51) Int Cl.⁷: $B60R\ 16/02$

(86) Internationale Anmeldenummer:
**PCT/EP00/09552**

(87) Internationale Veröffentlichungsnummer:
**WO 01/025056 (12.04.2001 Gazette 2001/15)**

(54) **VORRICHTUNG ZUR DRAHTLOSEN DATEN- UND ENERGIEÜBERTRAGUNG**

WIRELESS DATA AND ENERGY TRANSMISSION DEVICE

DISPOSITIF DE TRANSMISSION DE DONNEES ET D'ENERGIE SANS FIL

(84) Benannte Vertragsstaaten:
**AT BE CH CY DE DK ES FI FR GB GR IE IT LI LU MC NL PT SE**

(30) Priorität: **01.10.1999 DE 19947491
16.05.2000 DE 10023663**

(43) Veröffentlichungstag der Anmeldung:
**26.06.2002 Patentblatt 2002/26**

(73) Patentinhaber: **Kiekert Aktiengesellschaft
42579 Heiligenhaus (DE)**

(72) Erfinder:
• **BAER, Lothar
45219 Essen (DE)**
• **HEINRICH, Andreas
42579 Heiligenhaus (DE)**
• **KULIK, Klaus
42555 Velbert (DE)**
• **RÜFFER, Andreas
42579 Heiligenhaus (DE)**

(74) Vertreter: **Nunnenkamp, Jörg, Dr.
Andrejewski, Honke & Sozien
Patentanwälte
Theaterplatz 3
45127 Essen (DE)**

(56) Entgegenhaltungen:
**DE-A- 19 512 855          DE-A- 19 538 528
DE-C- 19 743 313**

## Beschreibung

Die Erfindung betrifft eine Vorrichtung zur drahtlosen Daten- und Energieübertragung zwischen einem Karosseriean- bzw. -einbauteil, insbesondere Kraftfahrzeug-Schiebetür, Fahrzeugsitz oder vergleichbares Zusatzaggregat, und einer Kraftfahrzeugkarosserie, mit einer elektrischen Versorgungsquelle, ferner mit karosserieseitigen Steuerelektronik sowie wenigstens einer zugehörigen karosserieseitigen Spule, und mit einer bauteilseitigen Steuerelektronik sowie wenigstens einer zugehörigen bauteilseitigen Spule, wobei beide Spulen sowohl zur Daten- als auch zur Energieübertragung über eine gemeinsame Sende-/Empfangsstrecke induktiv gekoppelt sind.

Eine derartige Vorrichtung wird in der EP 0 616 924 A1 beschrieben. Hier ist ein Übertrager vorgesehen, über welchen sowohl Energie in einer Richtung und Daten in beiden Richtungen übertragen werden. Schaltungsmittel auf beiden Seiten des Übertragers sorgen für den Ablauf der Übertragung sowie dessen Steuerung und Auswertung. Im Einzelnen ist der Übertrager mit einer primärseitigen und einer sekundärseitigen Wicklung ausgerüstet, wobei eine der Wicklungen ortsfest im Übertrager angeordnet ist, während die andere Wicklung relativ dazu beweglich ist. Die ortsfeste Wicklung steht dabei mit der Lenksäule eines Kraftfahrzeuges in Verbindung, während die bewegliche Wicklung eine Verbindung mit dem Lenkrad eines Kraftfahrzeuges eingeht.

Daneben kennt man Karosseriean- bzw. -einbauteile in der Ausgestaltung einer Schiebetür, wie sie grundsätzlich durch die DE 197 17 490 A1 bekannt geworden sind. Hier wird ein elektrisches Versorgungskabel auf einer Kabeltrommel mit Rückstellvorrichtung aufgewickelt. Dabei wird das eine Ende des Versorgungskabels an den Trommelkern der karosserieseitig gelagerten Kabeltrommel und das andere Ende an die Schiebetür angeschlossen. Derartige Verbindungseinrichtungen haben sich grundsätzlich bewährt, unterliegen jedoch je nach Einsatzdauer und -ort einem Verschleiß und müssen von Zeit zu Zeit gewartet werden.

Im Vergleich zu herkömmlichen Personenkraftfahrzeugen haben großräumigere Fahrzeuge wie sogenannte Minivans oder Transporter- und Kombifahrzeuge in den vergangenen Jahren durchweg verstärkt Marktanteile erworben. Derartige Fahrzeuge sind nicht selten mit mindestens einer Kraftfahrzeug-Schiebetür bzw. Schiebetür ausgestattet, die häufig an der Beifahrerseite hinter der Beifahrertür angeordnet ist. Im Zuge knapper werdender Parkfläche ist darüber hinaus ein vermehrter Einsatz von Schiebetüren auch in anderen Kraftfahrzeugarten durchaus wahrscheinlich. Schiebetüren lassen sich vergleichsweise erheblich platzsparender handhaben und erleichtern das Ein- und Aussteigen bzw. das Be- und Entladen von Kraftfahrzeugen durch eine nach dem Öffnen im Wesentlichen vollständig nutzbare Türöffnung, sind aber auf der anderen Seite im Vergleich zu den üblichen um Scharniere verschwenkbaren Türen auch konstruktiv aufwendiger.

Wie verschwenkbare Türen sind auch Schiebetüren häufig mit zahlreichen elektrischen Verbrauchern wie beispielsweise einer aktiven Einklemmschutzeinrichtung, einem Türschloss mit elektrischer Öffnungs- und/oder Zuziehhilfe sowie mit Zentralverriegelung und Diebstahlschutz mit diagnosefähigen Rückführungen/Abfragen, einem elektrischen Fensterheber sowie mit Bedienungseinheiten, z. B. für die Fensterheber und das Türschloss, ausgestattet. Folglich bedarf es der Übertragung von elektrischer Energie zur Steuerung der entsprechenden Einrichtungen und von Steuerdaten auf die in der (Schiebe-)Tür angeordnete Steuerelektronik von der Karosserie aus, was im Vergleich zu verschwenkbaren Türen durch die bei Schiebetüren fehlende Anbindung an eine Scharniersäule aufwendiger ist.

Aus der DE 197 06 393 A1 ist es bekannt, bei einem Kraftfahrzeug die entsprechenden Daten zwischen einer fahrzeugseitigen Steuerelektronik und der schiebetürseitigen Steuerelektronik zumindest bei geöffneter Schiebetür drahtlos über einen Sender und einen Empfänger mittels HF oder durch Schall oder Infrarotlicht zu übertragen.

Hierbei erfolgt die Energieversorgung für die schiebetürseitige Steuerelektronik bei geöffneter Tür über eine in der Schiebetür angeordnete Batterie, die gegebenenfalls auch von einem Solarpaneel gespeist werden kann. Bei geschlossener Tür wird die Energieversorgung der türseitigen Steuerelektronik von der fahrzeugseitigen Batterie über ein Kontaktsystem, vorzugsweise einen Mehrpolstecker, übernommen.

Aus der JP 07-267020 A1 ist es bekannt, die elektrische Versorgung für Verbraucher in Schiebetüren über ein Stecker/Buchsensystem vorzunehmen, wobei die Stecker und Buchsen bei geschlossener Tür zur Übertragung von elektrischer Leistung zu den Verbrauchern miteinander in Kontakt stehen.

Im Rahmen der DE 198 14 670 A1 ist bei einer Kraftfahrzeug-Schiebetür türseitig zur Energieversorgung für die Steuerelektronik ein Batterieelement vorgesehen, das über ein Stecker/Buchsensystem bei geschlossener Tür geladen werden kann.

Schließlich beschreibt die DE 196 02 316 C1 eine Vorrichtung zum Übertragen von Daten oder Energie. Diese besitzt einen Antennenschwingkreis, welcher von einer Erregergröße zum Schwingen angeregt wird. Die Schwingung wird zu einem Transponderschwingkreis transformatorisch übertragen.

Derartige Datenübertragungs- und Energieversorgungseinrichtungen für die Steuerelektronik haben sich grundsätzlich bewährt. Es versteht sich aber, dass ein Stecker/Buchsensystem bei geöffneter Tür und folglich in der Regel freiliegenden Kontakten korrodieren oder durch unsachgemäße Behandlung beschädigt werden kann. Dadurch kann die Verbindung für die Übertragung von den für die Steuerelektronik verwendeten "kleinen (Signal-)Strömen" (ca. 10 mA und weniger) beispielsweise durch zu hohe Widerstände zu Problemen führen.

Auch ist bei Verwendung einer separaten Batterie in der (Schiebe-)Tür zur Energieversorgung für die Steuerelektronik eine regelmäßige Überprüfung unbedingt erforderlich, um die Energieversorgung jederzeit sicherzustellen. - Hier will die Erfindung insgesamt Abhilfe schaffen.

Der Erfindung liegt das technische Problem zugrunde, eine derartige Vorrichtung so weiter zu bilden, dass insgesamt eine kostengünstige, robuste und zuverlässige Energie- und Datenübertragung gelingt.

Zur Lösung dieser Aufgabe schlägt die Erfindung bei einer gattungsgemäßen Vorrichtung vor, dass die bauteilseitige Spule von der karosserieseitigen Spule umschlossen wird und innerhalb der karosserieseitigen Spule längsverschiebbar ist, oder umgekehrt. Das heißt, die Erfindung umfasst selbstverständlich auch die umgekehrte Variante, wonach die karosserieseitige Spule von der bauteilseitigen Spule umschlossen wird und innerhalb der bauteilseitigen Spule längsverschiebbar ist.

Vorzugsweise sind sowohl die karosserieseitige Spule als auch die bauteilseitige Spule zur induktiven Kopplung im Wesentlichen parallel zueinander angeordnet oder besitzen jeweils sich überlappende Spulenquerschnitte. Es muss nur dafür gesorgt werden, dass die induktive Kopplung erhalten bleibt, das heißt, dass sich die erzeugten elektromagnetischen Felder jeweils durchdringen.

Dabei ist die karosserieseitige Spule in der Regel sowohl an die elektrische Versorgungsquelle als auch die elektronische Steuereinrichtung angeschlossen. Die bauteilseitige Spule steht demgegenüber mit der dortigen Steuerelektronik sowie gegebenenfalls einem Verbraucher in Verbindung.

Hierdurch wird im Ergebnis erreicht, dass die zuvor skizzierten Kontaktprobleme überwunden werden, weil auf eine drahtgebundene Daten- und/oder Energieübertragung bewusst verzichtet wird. Auch sind Beeinträchtigungen des bekannten Aufrollmechanismus (vgl. DE 197 17 490 A1) nicht (mehr) zu befürchten, weil hierauf verzichtet wird. Dies gilt auch für eine durch den Stand der Technik bekannte Batterie in der Schiebetür, so dass die hiermit verbundenen Installations- und Wartungskosten entfallen. Auch ist die Sicherheit insofern gewährleistet, weil der Ladezustand dieser Batterie nicht überwacht zu werden braucht. Im Rahmen der Erfindung liegt es dabei, die Sende-/Empfangsstrecke auch nur für den Daten- oder den Energietransport für die bauteil- bzw. schiebetürseitige Steuerelektronik zu nutzen.

Im Gegensatz zu der Lehre nach der EP 0 640 734 B1 erfolgt also eine drahtlose Energie- und Datenübertragung zwischen einzelnen Karosseriebestandteilen und nicht zwischen einem Türschlüssel und zugehörigem Schlosszylinder. Vergleichbares gilt mit Blick auf die DE 196 02 316 C1.

Dabei sollte betont werden, dass es sich bei dem beschriebenen Karosseriean- bzw. -einbauteil im Rahmen der Erfindung auch um einen Fahrzeugsitz oder vergleichbare Zusatzaggregate wie einen Kindersitz handeln kann. Bei einem Fahrzeugsitz sorgt die beschriebene Vorgehensweise dafür, dass im Rahmen einer Datenübertragung personenspezifische Daten an diesen Fahrzeugsitz von der Karosserie bzw. der karosserieseitigen Steuerelektronik drahtlos übertragen werden. Diese personenspezifischen Daten liegen in der Regel dann vor, wenn ein Dialog zwischen (HF-Fernbedienungs-)Schlüssel und karosserieseitiger Steuerelektronik in Gang gesetzt wird. Dies erreicht ein Bediener zumeist durch Einstecken eines zugehörigen Schlüsselstumpfes in eine Motorstarteinrichtung am Armaturenbrett nach positivem Abfrageergebnis sowie Erkennen des Schlüsseltypes.

In diesem Zusammenhang werden also sämtliche bediener- bzw. personenspezifischen Daten vom Schlüssel auf die karosserieseitige Steuerelektronik übertragen, die ihrerseits die entsprechenden Verbraucher bzw. Karosseriean- bzw. -einbauteile in der gewünschten Art und Weise anspricht. Hierzu gehört beispielsweise eine Außenspiegeleinstellung, eine Sitz- und Lehneneinstellung, ggf. eine Scheinwerfer- und Beleuchtungseinstellung usw.. Dabei erfolgt insbesondere die Daten- und/oder Energieübertragung so, wie dies zuvor beschrieben wurde.

Daneben eröffnet die Erfindung die Möglichkeit, Zusatzaggregate, beispielsweise einen ein- und ausbaubaren Kindersitz, mit Daten und/oder Energie zu versorgen. So ist es denkbar, die Stellung eines solchen Kindersitzes bei in Fahrtrichtung angeordneter Kindersitzlehne zu identifizieren und ein entsprechendes Airbag-System automatisch abzuschalten, damit im Falle einer Auslösung ein im Kindersitz befindliches Kind nicht verletzt wird. Es findet also in diesem Fall ebenfalls ein Daten- und/oder Energieaustausch zwischen der karosserieseitigen Steuerelektronik und dem betreffenden Zusatzaggregat, hier dem Kindersitz, statt. Denkbar ist auch eine Prüfung dergestalt, ob überhaupt ein (entfernbarer) Sitz bzw. Kindersitz vorhanden ist.

Daneben liegt es im Rahmen der Erfindung, eine entsprechende Sende-/Empfangsstrecke zwischen einem nicht entfernbaren, karosserieseitigen Basisteil eines Fahrzeugradios und einem entfernbaren Radiobedienteil zu etablieren. Folglich wird der universelle Charakter der beschriebenen Maßnahmen zur drahtlosen Daten- und/oder Energieübertragung deutlich.

Das macht schließlich auch das Beispiel klar, wonach bei einem Wohnmobil als Karosserieanbauteil eine Satellitenschüssel in der beschriebenen Art und Weise mit Daten und/oder Energie versorgt werden kann. - Typische Anwendungsfälle sind jedoch darin zu sehen, dass Türen, insbesondere Schiebetüren, auf diese Weise mit Energie und/oder Daten gespeist werden.

Weitere erfindungswesentliche Merkmale werden im Folgenden beschrieben. So schlägt der Anmeldungsgegenstand vor, dass die karosserieseitige Spule als Luftspule oder Ferritspule mit langgestrecktem rechteckförmigen Querschnitt und einem umschlossenen Längsspalt für die hierin verschiebbare einrichtungsseitige bzw. bauteilseitige Spule ausgebildet ist. Üblicherweise ist diese karosserieseitige Spule in eine ohnehin vorhandene Führungsschiene für die Schiebetür integriert oder in unmittelbarer Nachbarschaft zu dieser Führungsschiene angeordnet.

Dabei muss natürlich darauf geachtet werden, dass die solchermaßen eingesetzte karosserieseitige Spule gegenüber der in der Regel aus Metall bestehenden Karosserie elektrisch isoliert ist. Dabei bietet es sich ferner an, die einrichtungsseitige Spule in oder an einem Führungsschlitten zur Führung der Schiebetür im Bereich der Führungsschiene anzuordnen. Denn nun kann auf ohnehin vorhandene Aggregate bei der Realisierung einer Schiebetür zurückgegriffen werden, nämlich zum einen die Führungsschiene, zum anderen den Führungsschlitten. Diese müssen lediglich im Sinne der Erfindung durch die angesprochenen Spulen modifiziert werden. Hierdurch gelingt eine besonders kompakte und robuste Ausgestaltung, weil einerseits die Führungsschiene, andererseits der Führungsschlitten als Halterung und/oder Schutz für die jeweilige Spule dienen.

Um eine besonders günstige induktive Kopplung zwischen bauteilseitiger und karosserieseitiger Spule zu gewährleisten, ist weiter vorgesehen, dass die bauteilseitige Spule einen an die Breite des Längsspaltes angepassten Querschnitt aufweist. Sie kann zusammen mit einer daran angeschlossenen Elektronikeinheit bzw. einem Mikrocontroller einen Transponder bilden. In diesem Fall formen bevorzugt Spule und Elektronikeinheit die Transponder-Baueinheit, mit welcher vorzugsweise ein (bi-)direktionaler Daten- und/oder Energieaustausch sichergestellt wird.

Die Daten- und/oder Energieübertragung wird wie folgt durchgeführt. Zur Darstellung einer Energieversorgung der einrichtungs- bzw. schiebetürseitigen Steuerelektronik und/oder des dortigen Verbrauchers fungiert die karosserieseitige Spule bzw. das dortige Spulenelement als Sendeantenne und überträgt auf die bauteilseitige Spule als Empfangsantenne eine Spannung (vorzugsweise mit der Frequenz 125 kHz oder 13,56 MHz). Dabei wird die Energieübertragung in der Regel gepulst durchgeführt, um den Ruhestrom der gesamten Vorrichtung zu minimieren. D. h. es werden periodische Signale mit einer Periodendauer von vorzugsweise 150 ms und einer Dauer von ca. 5 ms übertragen, um die bauteilseitige Steuerelektronik bzw. den oder die dortigen Verbraucher mit Energie zu versorgen.

Um gleichzeitig und/oder zeitversetzt einen Datenaustausch bzw. eine Datenübertragung zu ermöglichen, wird die zuvor beschriebene pulsierende Spannung bzw. das hierzu korrespondierende Signal moduliert. Mit anderen Worten wird der Wechselspannungsanteil mit einem niederfrequenten Informationssignal überlagert, welches in der bauteilseitigen Steuerelektronik bzw. einer dortigen Empfangseinheit aufgenommen, gefiltert und demoduliert wird. Jedenfalls lässt sich das übertragene niederfrequente Informationssignal herausfiltern und in einem dortigen Mikrocontroller weiterverarbeiten, um beispielsweise das gewünschte Bedienungssignal in entsprechende Betätigungen umzusetzen. Dies ist grundsätzlich bekannt.

Im Rahmen der Erfindung ist es auch möglich, mit einer Frequenz von 13 bis 13,56 MHz zu arbeiten. Immer ist gewährleistet, dass im Rahmen des Datenaustausches sämtliche erforderlichen Informationen übertragen werden, und zwar von der Karosserie zur Schiebetür oder umgekehrt. So können beispielsweise die nachfolgenden und in einer Schiebetür installierten Einrichtungen abgefragt werden: Sperrklinkenschalter, Drehfallenschalter, Zentralverriegelungsschalter, Diebstahlschutzschalter, Kindersicherungsschalter, Einklemmschutzsystem, Positionsermittlung für den Fensterheber usw..

Selbstverständlich kann ergänzend zu der drahtlosen Energieübertragung auch eine drahtgebundene Energieübertragung stattfinden, die sich insbesondere für den Fall anbietet, dass die Schiebetür geschlossen ist. In einem solchen Fall werden die betreffenden Aggregate in der Regel konventionell, d. h. über beispielsweise Kontakte, mit der erforderlichen elektrischen Energie aus der karosserieseitigen elektrischen Versorgungsquelle gespeist. So ist es denkbar, nur die einrichtungsseitige Steuerelektronik drahtlos mit Energie zu versorgen, während die übrigen Verbraucher konventionell und drahtgebunden mit Strom gespeist werden.

Immer ist gewährleistet, dass die bauteil-/einrichtungs- bzw. schiebetürseitige Steuerelektronik ebenso wie ein eventuell zu betätigender Verbraucher (beispielsweise eine Zentralverriegelungsanlage und/oder ein Fensterheber) unabhängig von der jeweiligen Stellung der Schiebetür sowohl mit Daten als auch Energie versorgt werden. Mit anderen Worten wird im Rahmen der Erfindung ein vergleichbarer Status und eine ähnliche Funktionsweise erreicht wie bei einer verschwenkbaren Tür oder Klappe, die konventionell drahtgebunden mit den erforderlichen Daten und/ oder der Energie versorgt wird. Hierin sind die wesentlichen Vorteile zu sehen.

Im Folgenden wird die Erfindung anhand einer lediglich ein Ausführungsbeispiel darstellenden Zeichnung näher erläutert; es zeigen:

**Fig. 1** ein Kraftfahrzeug mit einer teilweise geöffneten Schiebetür,

**Fig. 2** eine schematische Darstellung der wesentlichen Aggregate nach Fig. 1 bei geschlossener Schiebetür,

**Fig. 3** die wesentlichen Elemente der Erfindung,

**Fig. 4a, 4b und 4c**    eine erste Variante der Daten-/Energieübertragung bei einer Führungsschiene einer Schiebetür in perspektivischer Ansicht (vgl. Fig. 4a), in schematischer Aufsicht (vgl. Fig. 4b) und im Schnitt (vgl. Fig. 4c),

**Fig. 5**    eine Abwandlung der Ausgestaltung nicht zur Erfindung gehörend nach Fig. 4 und

**Fig. 6**    eine Variante mit Fahrzeugsitz, ebenfalls nicht zur Erfindung gehörend.

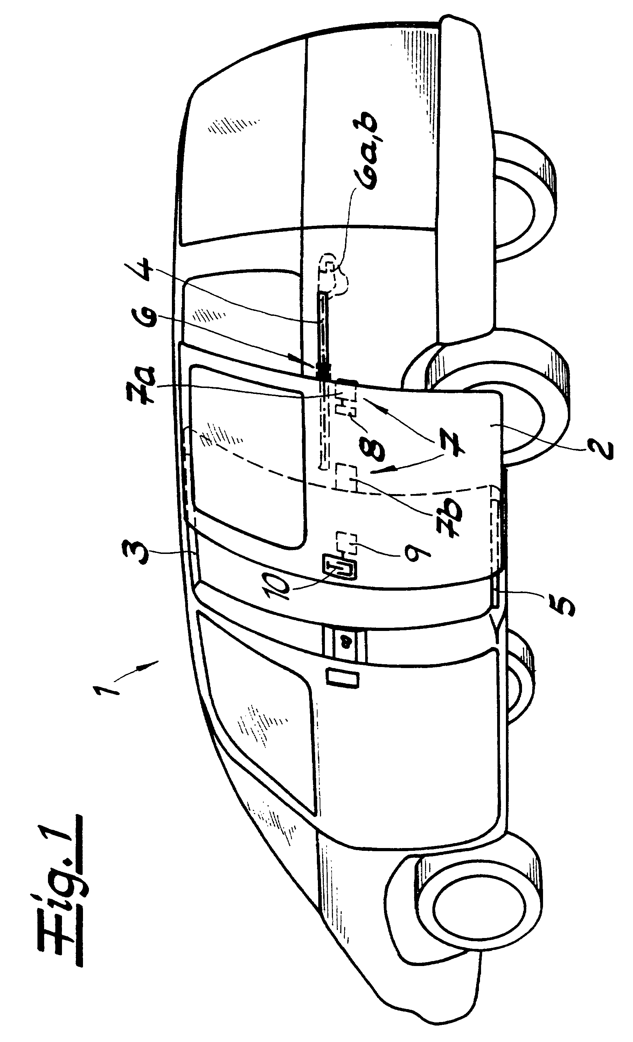

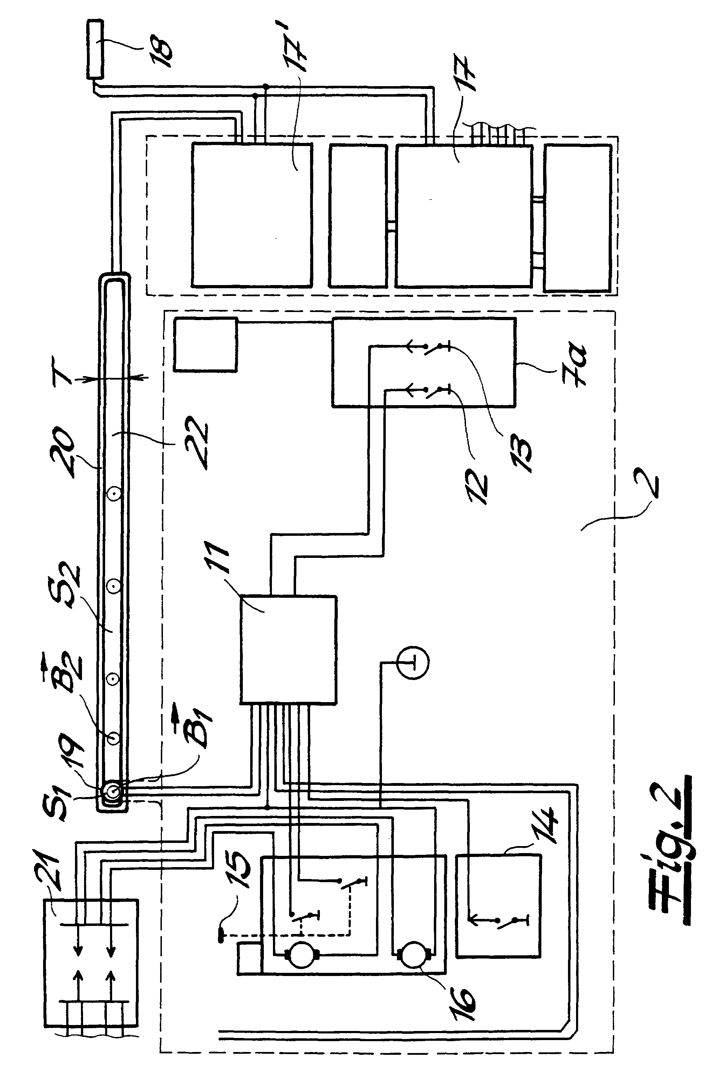

In der Fig. 1 ist ein Kraftfahrzeug 1 mit einer in einer Seitenwand angeordneten Kraftfahrzeugtür 2 dargestellt. Bei dieser Kraftfahrzeugtür 2 handelt es sich im Rahmen der Erfindung um eine bewegliche Abdeck- oder Anbaueinrichtung als Teil einer Kraftfahrzeugkarosserie, vorliegend eine Kraftfahrzeug-Schiebetür 2. Diese Kraftfahrzeug-Schiebetür 2 ist in Führungsschienen 3, 4, 5 geführt. Hierzu dienen nicht ausdrücklich dargestellte Rollen oder ein zugehöriger Führungsschlitten. Die Fig. 1 zeigt die Kraftfahrzeug-Schiebetür 2 in teilweise geöffneter Stellung, während in der Fig. 2 die geschlossene Stellung gezeigt ist. Zur Überführung der Kraftfahrzeug-Schiebetür 2 in die Schließstellung ist sie aus der Verschiebeebene heraus einrückbar.

Die Bewegung der Kraftfahrzeug-Schiebetür 2 kann mechanisch und elektrisch erfolgen. Zu diesem Zweck ist ein Stelltrieb 6 vorgesehen, welcher im Ausführungsbeispiel einen Zahnriemen und eine Gelenkanordnung für die Einrück- bzw. Ausrückbewegung umfasst, wie dies im Einzelnen in der deutschen Patentanmeldung 197 02 698 A1 beschrieben ist.

Der Stelltrieb 6 weist einen Schiebetürantrieb 6a auf, welcher mechanisch gesteuert sein kann. Außerdem ist in der Fig. 1 eine Kupplung 6b für den bereits angesprochenen Zahnriemen zu erkennen. Im Ausführungsbeispiel wird der Schiebetürantrieb 6a elektronisch gesteuert. Weiter ist in Fig. 1 zumindest ein Kraftfahrzeugtürverschluss 7 in der Karosserie zu erkennen. Dieser Kraftfahrzeugtürverschluss 7 ist mit einem Schloss 7a in der Kraftfahrzeugtür 2 bzw. Kraftfahrzeug-Schiebetür 2 und einem Schlosshalter 7b in der Karosserie ausgerüstet. Der Kraftfahrzeugtürverschluss 7 bildet gleichzeitig den Antrieb für die bereits angesprochene Einrückbewegung (beim Schließen) und die Ausrückbewegung (beim Öffnen) der Kraftfahrzeug-Schiebetür 2.

Zu diesem Zweck ist der Schlosshalter 7b nach dem Ausführungsbeispiel als Servo-Schlosshalter 7b ausgebildet. Zu erkennen sind ferner in Fig. 1 ein Betätigungsmechanismus 8 mit Diebstahlsicherung sowie ein Steuerschloss 9, welches mechanisch mit einem Türaußengriff 10 in Verbindung steht (vgl. die strichpunktierten "mechanischen" Verbindungen in der Fig. 1). Folglich besteht eine mechanische Verbindung zwischen den Bauteilen Türaußengriff 10 (bzw. zugehöriger Türinnengriff) - Steuerschloss 9 - Betätigungsmechanismus 8 mit Diebstahlsicherung - Schloss 7a des Kraftfahrzeugtürverschlusses 7 (vgl. die mechanische Verbindung Steuerschloss 9 - Schloss 7a in der Fig. 1). Auf das Steuerschloss 9 wirken zudem eine nicht näher dargestellte Zentralverriegelungsanlage sowie ein Kindersicherungsschalter. Weitere Einzelheiten sind in der eingangs bereits genannten DE 197 06 393 A1 beschrieben.

In der Kraftfahrzeug-Schiebetür 2 findet sich darüber hinaus eine bauteil-/einrichtungs- bzw. (schiebe-)türseitige elektronische Steuereinrichtung 11 bzw. Steuerelektronik 11, welche mit dem Schloss 7a verbunden ist. Denn die Steuerelektronik 11 erhält Signale von einem dortigen Sperrklinkenschalter 12 sowie einem Drehfallenschalter 13. Ebenfalls wird eine Türaußenbetätigungsvorrichtung 14 mit einem aktiven Einklemmschutz in Form eines umlaufenden elektrisch leitenden Kunststoffprofils zur Erfassung des vom Anpressdruck abhängigen Widerstandes ausgewertet. Von der Steuerelektronik 11 wird eine elektrische Innenbetätigungsvorrichtung 15 sowie gegebenenfalls eine Sperrklinke 16 beaufschlagt. Folglich lässt sich je nach den an den Einrichtungen 12, 13 und 14 abgefragten Werten die Kraftfahrzeug-Schiebetür 2 bei Betätigung eines Innenbetätigungs- oder Außenbetätigungshebels elektrisch (oder auch mechanisch) schließen (vgl. Fig. 2).

Karosserieseitig sind eine dortige Steuerelektronik 17 sowie eine zugehörige Empfangseinheit 17' realisiert, welche beide z. B. in der C-Säule des Kraftfahrzeuges 1 angeordnet sind. Zusätzlich ist eine elektrische Versorgungsquelle 18 im Kraftfahrzeug 1 zu erkennen. Zur drahtlosen Daten- und/oder Energieübertragung zwischen Kraftfahrzeug 1 bzw. Karosserie und Abdeck- oder Anbaueinrichtung 2 bzw. Kraftfahrzeug-Schiebetür 2 sind zwei Spulen 19, 20 realisiert, welche die Sende-/Empfangsstrecke induktiv überbrücken. Dabei ist die türseitige Spule 19 mit der Steuerelektronik 11 und gegebenenfalls entsprechenden Verbrauchern wie der Sperrklinke 16 sowie der Innenbetätigungsvorrichtung 15 zur Energieversorgung verbunden. Eine Datenaus-wertung bzw. -übertragung erfolgt mit Hilfe der Steuerelektronik 11, und zwar in der Art und Weise, wie sie einleitend bereits skizziert wurde.

Nach dem Ausführungsbeispiel kann eine zusätzliche Energieversorgung der Verbraucher 15 und 16 bzw. 11 über Kontaktstifte 21 bei geschlossener Kraftfahrzeug-Schiebetür 2 erfolgen. Dies ist jedoch nicht zwingend, weil im Rahmen der Erfindung die Energieübertragung nach Möglichkeit über die Spulen 19, 20 erfolgen soll. Gleiches gilt für die Datenübertragung, die in der Regel bidirektional ausgestaltet ist.

Die karosserieseitige Spule 20 ist über die Empfangseinheit 17' mit der elektrischen Versorgungsquelle 18 und damit der Steuerelektronik 17 verbunden. Nach dem Ausführungsbeispiel sind beide Spulen 19, 20 mit sich überlappenden Spulenquerschnitten $S_1$, $S_2$ zueinander angeordnet bzw. erstrecken sich parallel zueinander, wie die Fig.

3 deutlich macht, um die erforderliche induktive bzw. transformatorische Kopplung zu realisieren. Denn durch diese Maßnahme ist gewährleistet, dass die entstehenden und abgefragten Magnetfelder bzw. die zugehörigen magnetischen Induktionen $\vec{B_1}$ $\vec{B_2}$ und die korrespondierenden Spulenflächen $S_1$, $S_2$ bzw. Spulenquerschnitte im Wesentlichen parallel zueinander ausgerichtet sind (vgl. die angedeuteten Magnetfeldlinien in Fig. 2).

Um die drahtlose Daten- und Energieübertragung auch bei bewegter Kraftfahrzeug-Schiebetür 2 sicherzustellen, ist die karosserieseitige Spule 20 in eine Führungsschiene - nach dem Ausführungsbeispiel die obere Führungsschiene 3 - des Kraftfahrzeuges 1 integriert. Vorliegend erstreckt sich die karosserieseitige Spule 20 im Wesentlichen in Horizontalrichtung, kann jedoch auch vertikal oder praktisch jeden beliebigen Winkel zur Fahrbahnebene einnehmen.

Bei der karosserieseitigen Spule 20 handelt es sich beispielsweise um eine Luftspule aus lackiertem Kupferdraht mit einem Spulenkörper zur Fixierung in oder an der Karosserie. Diese Spule bzw. Luftspule 20 weist einen langgestreckten rechteckförmigen Querschnitt $S_2$ auf, wobei die Länge der Längsseite größtenteils der Länge der Türöffnung entspricht. Die Spule 20 umschließt einen Längsspalt 22 gleichsam ovalförmig, welcher eine Breite T zwischen 10 und 50 mm, vorzugsweise ca. 18 mm, aufweist.

In diesem Längsspalt 22 kann die einrichtungs-/bauteil- bzw. schiebetürseitige Spule 19 längsverschoben werden. Auch bei dieser Spule 19 handelt es sich beispielsweise um eine Luftspule aus Kupferdraht auf einem Spulenkörper (vorzugsweise aus Kunststoff). Die vorgenannte Spule 19 weist einen an die Breite T des Längsspaltes 22 angepassten Querschnitt $S_1$ auf. Sie kann als Rundspule mit einer Länge zwischen 20 bis 60 mm, vorzugsweise 40 mm ausgeführt sein. Dabei sind sowohl runde als auch viereckige Querschnitte $S_1$ mit abgerundeten Ecken denkbar. Als Durchmesser hat sich ein solcher als besonders vorteilhaft herausgestellt, welcher der Breite T entspricht und ca. 10 bis 50 mm, vorzugsweise 10 bis 30 mm beträgt. Besonders vorteilhaft hat sich ein Durchmesserwert von ca. 18 mm erwiesen.

Jedenfalls wird durch die Anpassung des Querschnittes $S_1$ der Spule 19 an den Spalt 22 mit dessen Breite T eine optimale Führung und Ankopplung der schiebetürseitigen Spule 19 an das von der karosserieseitigen Spule 20 erzeugte elektromagnetische Feld erreicht und umgekehrt.

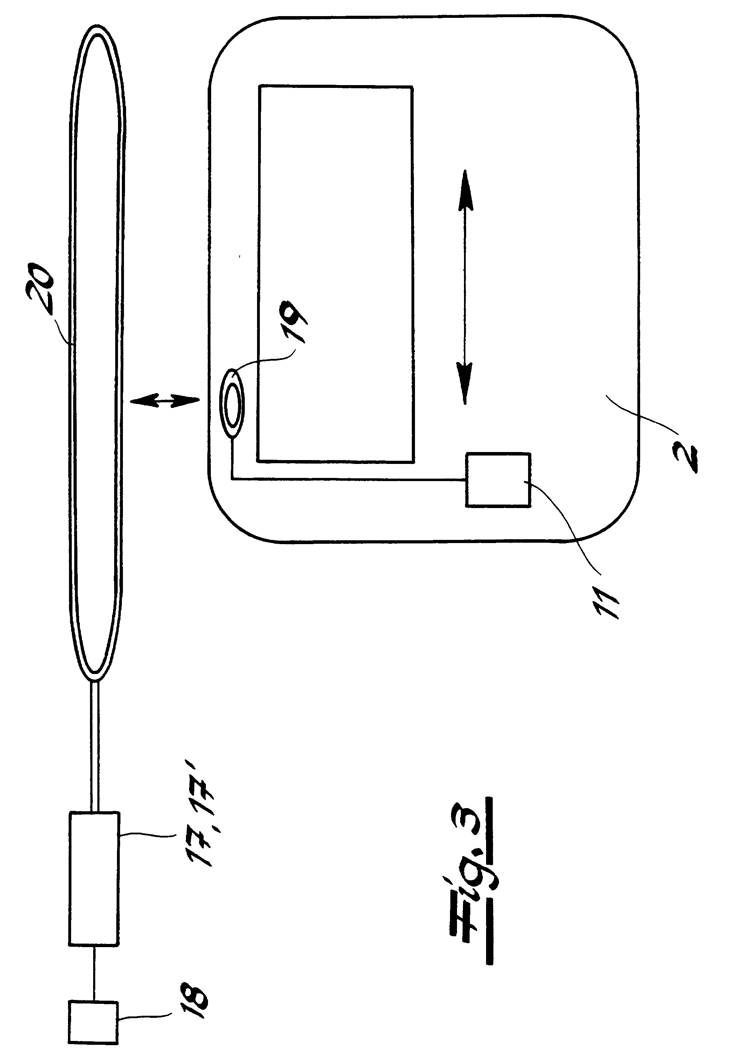

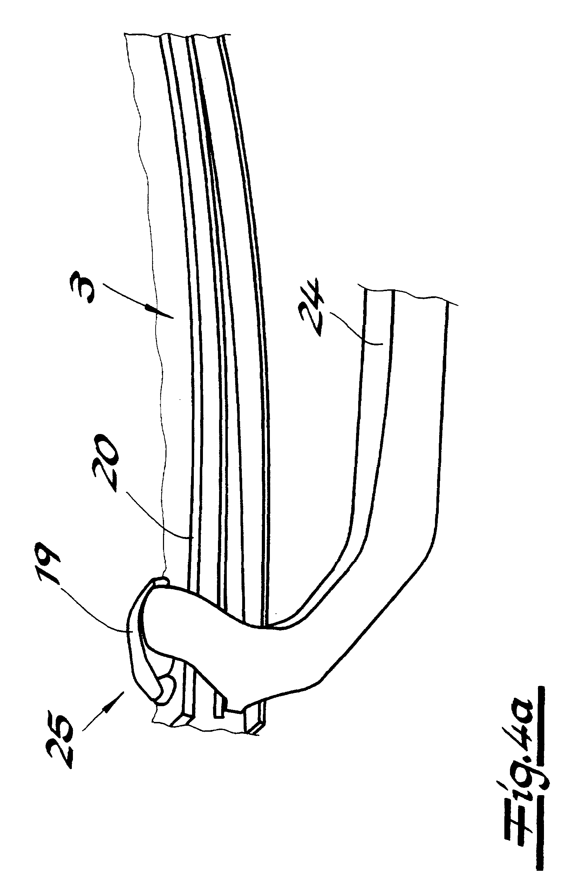

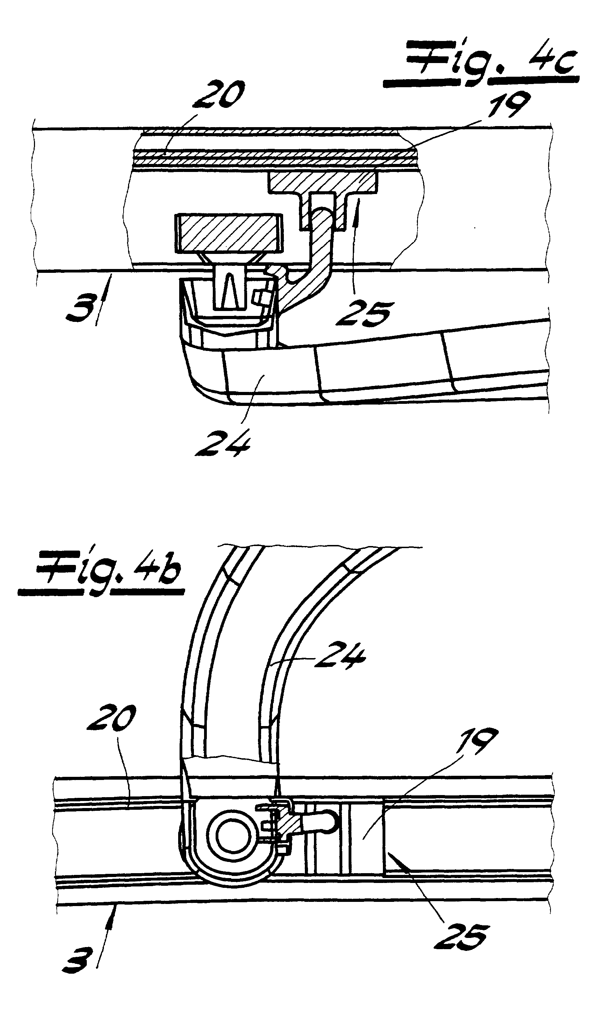

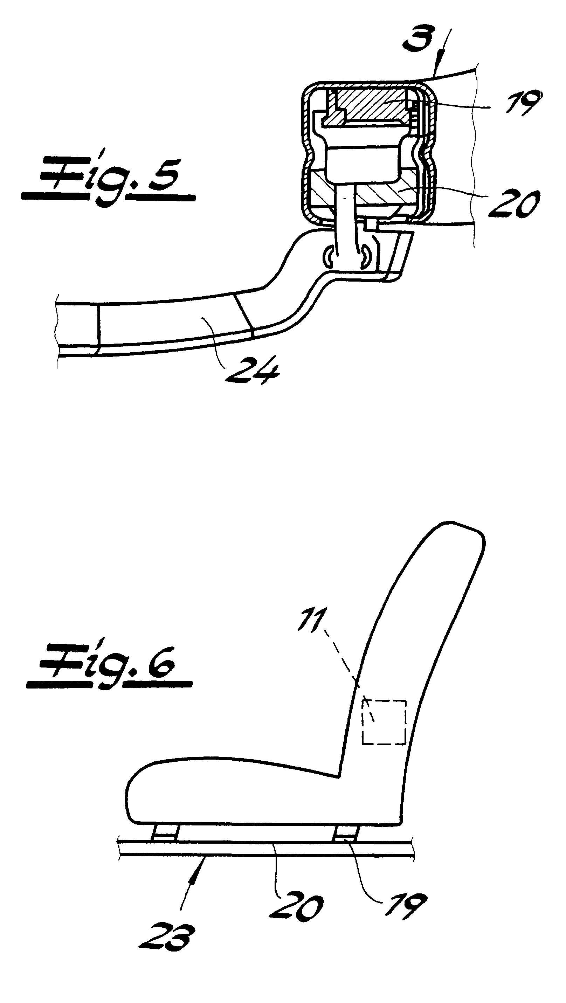

Im Rahmen der bereits angesprochenen Fig. 3 werden die für die Erfindung wesentlichen Aggregate noch einmal in vereinfachter Darstellung gezeigt. Entsprechend der Fig. 3 ist auch der in Fig. 6 dargestllte Fahrzeugsitz aufgebaut. Hier befindet sich in einer Sitzschiene 23 die karosserieseitige Spule 20, welche induktiv mit der zugehörigen bauteilseitigen Spule 19 gekoppelt ist. Diese Spule 19 findet sich in nicht ausdrücklich dargestellten Rollen, mit welcher der Fahrzeugsitz in der Sitzschiene 23 längsverschiebbar gehalten wird. Zusätzlich ist die bauteilseitige Steuerelektronik 11 im Innern des Fahrzeugsitzes angedeutet. Dabei mag die Kopplung bzw. Ausgestaltung der Spulen 19, 20 grundsätzlich so vorgenommen sein, wie dies mit Bezug auf die nachfolgend zu erläuternden Figuren 4 und 5 im Detail dargestellt ist.

Im Rahmen der Fig. 4a erkennt man eine Führungsschiene 3 an der Kraftfahrzeug-Schiebetür 2, die gleichzeitig die Funktion eines Spulenträgers übernimmt und vorzugsweise aus Kunststoff gefertigt ist. Diese Führungsschiene 3 erstreckt sich im Wesentlichen an der Fahrzeugaußenhaut in Kraftfahrzeuglängsrichtung, wie dies die Fig. 1 unmittelbar deutlich macht. Endseitig eines Auslegers 24 zur Aufnahme der nicht dargestellten Kraftfahrzeug-Schiebetür 2 findet sich die bauteil- bzw. schiebetürseitige Spule 19. Diese Spule 19 gleitet ausweislich der Fig. 4b und 4c an der karosserieseitigen Spule 20 entlang, d. h. beide Spulen 19, 20 sind im Wesentlichen parallel zueinander angeordnet.

Durch die unmittelbar benachbarte Anordnung zueinander wird die gewünschte induktive Kopplung erreicht, die den beschriebenen Daten- und/oder Energieübertrag ermöglicht. Im Rahmen des Ausführungsbeispiels nach der Fig. 4 ist die Spule 19 in einen Gleitschuh 25 aus beispielsweise Kunststoff eingebettet, welcher sich entlang der Führungsschiene 3 aus Metall oder Kunststoff bewegt und als Führungsschlitten fungiert.

Die Führungsschiene 3 trägt die Spule 20, die im Rahmen der Variante nach der Fig. 5 auch in die Führungsschiene 3 eingebettet sein kann. Nach dieser Variante, die nicht zur Erfindung gehört sind die Spule 19 und die Spule 20 sogar voneinander beabstandet, was jedoch unproblematisch ist, solange sich die jeweils erzeugten elektromagnetischen Felder durchdringen bzw. in der jeweils anderen Spule 19, 20 ein Feld ausreichender Stärke induziert wird.

**Patentansprüche**

1. Vorrichtung zur drahtlosen Daten- und Energieübertragung zwischen einem Karosseriean- bzw. -einbauteil, insbesondere einer Kraftfahrzeug-Schiebetür (2), einem Fahrzeugsitz oder einem vergleichbaren Zusatzaggregat, und einer Kraftfahrzeugkarosserie (1), mit

   - einer elektrischen Versorgungsquelle (18), ferner mit:

- einer karosserieseitigen Steuerelektronik (17), (17') sowie wenigstens einer zugehörigen karosserieseitigen Spule (20), und mit

- einer bauteilseitigen Steuerelektronik (11) sowie wenigstens einer zugehörigen bauteilseitigen Spule (19),

wobei beide Spulen (19, 20) sowohl zur Daten- als auch zur Energieübertragung über eine gemeinsame Sende-/Empfangsstrecke induktiv gekoppelt sind,
**dadurch gekennzeichnet, dass**

- die bauteilseitige Spule (19) von der karosserieseitigen Spule (20) umschlossen wird und innerhalb der karosserieseitigen Spule (20) längsverschiebbar ist, oder umgekehrt.

**2.** Vorrichtung nach Anspruch 1, **dadurch gekennzeichnet, dass** die karosserieseitige Spule (20) und die bauteilseitige Spule (19) im Wesentlichen parallel zueinander oder mit sich überlappenden Spulenquerschnitten ($S_1$, $S_2$) angeordnet sind.

**3.** Vorrichtung nach Anspruch 1 oder 2, **dadurch gekennzeichnet, dass** die karosserieseitige Spule (20) als Luftspule oder Ferritspule mit langgestrecktem rechteckförmigen Querschnitt und einem umschlossenen Längsspalt (22) für die hierin verschiebbare bauteilseitige Spule (19) ausgebildet ist, oder umgekehrt.

**4.** Vorrichtung nach einem der Ansprüche 1 bis 3, **dadurch gekennzeichnet, dass** die bauteilseitige Spule (19) einen an die Breite (T) des Längsspaltes (22) angepassten Querschnitt ($S_1$) aufweist.

**5.** Vorrichtung nach einem der Ansprüche 1 bis 4, **dadurch gekennzeichnet, dass** die bauteilseitige Spule (19) zusammen mit einer daran angeschlossenen Elektronikeinheit einen Transponder bildet.

**6.** Vorrichtung nach einem der Ansprüche 1 bis 5, **dadurch gekennzeichnet, dass** die karosserieseitige Spule (20) in eine Führungsschiene, vorzugsweise die obere Führungsschiene (3), für die Schiebetür (2) integriert ist, und dass die bauteilseitige Spule (19) an einem Führungsschlitten zur Führung der. Kraftfahrzeug-Schiebetür (2) in der Führungsschiene (3) angeordnet ist.

**7.** Vorrichtung nach einem der Ansprüche 1 bis 6, **dadurch gekennzeichnet, dass** eine bidirektionale Datenübertragung stattfindet.

**Claims**

**1.** An apparatus for the wireless transmission of data and energy between a component built on to or into a vehicle body, particularly a motor vehicle sliding door (2), a vehicle seat or a comparable attachment unit, and a motor vehicle body (1), comprising

- an electrical supply source (18), further comprising

- a control electronics unit (17), (17') on the body, as well as at least one associated coil (20) on the body, and comprising

- a control electronics unit (11) on the component, as well as at least one associated coil (19) on the component,

wherein both coils (19, 20) are inductively coupled, both for data transmission and for energy transmission, via a common transmitting/receiving section,
**characterised in that**

- the coil (19) on the component is surrounded by the coil (20) on the body and is longitudinally displaceable inside the coil (20) on the body, or vice versa.

**2.** An apparatus according to claim 1, **characterised in that** the coil (20) on the body and the coil (19) on the component are disposed substantially parallel to each other or with overlapping coil cross-sections ($S_1$, $S_2$).

3.  An apparatus according to claim 1 or 2, **characterised in that** the coil (20) on the body is designed as an air-core coil or ferrite-core coil having an elongated rectangular cross section and an enclosed longitudinal gap (22) for the coil (19) on the component which is displaceable therein, or vice versa.

4.  An apparatus according to any one of claims 1 to 3, **characterised in that** the coil (19) on the component has a cross-section ($S_1$) which is matched to the width (T) of the longitudinal gap (22).

5.  An apparatus according to any one of claims 1 to 4, **characterised in that** the coil (19) on the component, together with an electronics unit connected thereto, forms a transponder.

6.  An apparatus according to any one of claims 1 to 5, **characterised in that** the coil (20) on the body is integrated in a guide rail, preferably the upper guide rail (3), for the sliding door (2), and that the coil (19) on the component is disposed on a sliding guide for guiding the motor vehicle sliding door (2) in the guide rail (3).

7.  An apparatus according to any one of claims 1 to 6, **characterised in that** bidirectional data transmission occurs.

**Revendications**

1.  Dispositif de transmission de données et d'énergie sans fil entre une pièce de carrosserie à rapporter ou incorporée, en particulier une portière coulissante de véhicule automobile (2), un siège de véhicule automobile ou un agrégat additionnel comparable, et une carrosserie de véhicule automobile (1), avec

    -   une source d'alimentation électrique (18), avec de plus
    -   une électronique de commande (17), (17') ainsi qu'avec au moins une bobine (20) associée côté carrosserie, et avec
    -   une électronique de commande (11) côté pièce ainsi qu'avec au moins une bobine (19) associée côté pièce,

    les deux bobines (19,20) étant associées par couplage inductif pour la transmission tant de données que d'énergie sur un trajet d'émission/réception commun,
    **caractérisé en ce que**

    -   la bobine côté pièce (19) est entourée par la bobine côté carrosserie (20) et peut être déplacée longitudinalement à l'intérieur de la bobine côté carrosserie (20) ou le contraire.

2.  Dispositif selon la revendication 1, **caractérisé en ce que** la bobine côté carrosserie (20) et la bobine côté pièce 19) sont disposées essentiellement parallèles l'une à l'autre ou avec des sections transversales de bobines se chevauchant ($S_1$, $S_2$).

3.  Dispositif selon la revendication 1 ou 2, **caractérisé en ce que** la bobine côté carrosserie (20) est conçue comme une bobine à air ou une bobine à noyau de ferrite avec une section rectangulaire allongée et une fente longitudinale (22) fermée pour la bobine côté pièce (19) coulissante à l'intérieur ou l'inverse.

4.  Dispositif selon l'une des revendications 1 à 3, **caractérisé en ce que** la bobine côté pièce (19) présente une section transversale ($S_1$) adaptée à la largeur (T) de la fente longitudinale (22).

5.  Dispositif selon l'une des revendications 1 à 4, **caractérisé en ce que** la bobine côté carrosserie (19) forme un transpondeur avec une unité électronique qui lui est reliée.

6.  Dispositif selon l'une des revendications 1 à 5, **caractérisé en ce que** la bobine côté carrosserie (20) est intégrée dans un rail de guidage, de préférence le rail de guidage supérieur (3), pour la portière coulissante (2), et **en ce que** la bobine côté pièce (19) est disposée sur une rainure de guidage pour le guidage de la portière coulissante (2) du véhicule automobile dans le rail de guidage.

7.  Dispositif selon l'une des revendications 1 à 6, **caractérisé en ce que** s'effectue une transmission de données bidirectionnelle.

**Fig.1**

1  3  7a  6  4

10

9  7b  8  7

5

2

6a,b

EP 1 216 165 B1

EP 1 216 165 B1

Fig. 2

10

Fig. 3

Fig.4a

Fig. 4c

Fig. 4b

Fig.5

Fig.6